# EUROPEAN PATENT SPECIFICATION

(11) **EP 2 172 581 B1**
(45) Date of publication and mention of the grant of the patent: **27.01.2016**
(21) Application number: 09171849.4
(22) Date of filing: 30.09.2009
(51) Int. Cl.: C25B 1/24, C25B 1/26, C02F 1/467, C25B 9/00, C25B 15/02, C25B 15/08

(54) **Electrolytic device for generation of ph-controlled hypohalous acid aqueous solutions for disinfectant applications**
Elektrolytische Vorrichtung zur Herstellung von pH-kontrollierten hypohalogenige Säurelösungen für die Desinfizierung
Dispositif électrolytique pour la production de solutions d'acide hypohalogéneux de pH contrôlé pour la désinfection.

(30) Priority: 01.10.2008 US 243457
(43) Date of publication of application: 07.04.2010
(73) Proprietor: Gojo Industries, Inc., Akron, OH 44311 (US)
(72) Inventor: Scherson, Daniel A., Beachwood, OH 44122 (US); Wegelin, Jackson W., Stow, OH 44224 (US); Hemker, Wilfred J., Akron, OH 44312 (US)
(74) Representative: Tetzner, Michael

(56) References cited:
- WO-A2-01/42143
- GB-A- 1 567 274
- US-A1- 2002 134 687
- US-A1- 2006 054 510
- US-B1- 6 547 947
- US-B1- 6 878 287

## Description

The present invention relates to a method for forming hypohalous acid. This method has the advantage whereby the pH of the solution is regulated and optimized. Such a method and device is particularly useful for preparing hypochlorous acid. Specifically, the resultant effluent exiting the device, which may be HClO in aqueous solution, is suitable for use in hand sanitizers.

Others have attempted to produce hypohalous acids using a variety of methods. For example, one method of producing low-chloride aqueous solutions of hypochlorous acid (HClO) includes spraying fine droplets of aqueous alkali metal hydroxides or alkaline earth metal hydroxides in a reactor dryer with chlorine gas to make hypochlorous acid gas and solid metal chloride. Creating the spray of fine droplets requires high pressures, and thus, a high energy input. The hypochlorous acid gas is then condensed along with the water vapor, requiring refrigeration equipment to achieve condensing temperatures, to produce concentrated hypochlorous acid. Disadvantages of this process include difficulty in handling the solid salt, high chlorine ratios, and energy inefficiency.

Another process which shares the aforementioned disadvantages for making aqueous hypochlorous acid includes spraying a solution of alkali metal hydroxide into a chlorine atmosphere resulting in HClO vaporization and a dry solid salt. With this process, aqueous HClO solution is produced by absorption of the HClO in water as opposed to the condensation of the HClO and water vapor.

Still another process uses an organic solvent to extract HClO from a brine solution. This process suffers from a need to further remove the HClO from the organic solvent to produce an aqueous HClO solution, a need to remove residual solvent from the brine solution, and undesirable reactions of HClO with the organic solvent.

Despite the several known processes for producing hypochlorous acid, there remains a need for a quick, safe, and efficient process for producing hypochlorous acid solutions suitable for disinfectant applications. Therefore, methods which do not require handling of solid salt by-products or chlorine gas input have been sought, as have more energy efficient methods been desired which do not require large heating/cooling cycles or high pressure on the liquid feed.

One method for producing hypochlorous acid solutions suitable for use as a disinfectant in food processing describes controlling the hypochlorite/hypochlorous acid balance of a stream by mixing liquid acid with a pressurized carrier stream which has been chlorinated by the addition of a chlorination agent. By decreasing the pH of the liquid stream, the relative ratio of hypochlorous acid to hypochlorite of the liquid stream is increased. This process allowed for the manipulation of the pressurized streams in order to produce specific concentrations of hypochlorous acid providing greater control over the reaction process; however this process necessitates the introduction of a gaseous species other than air at preferred elevated temperatures.

Electrolytic cells have been utilized in prior inventions as related to production of acidic liquids. One such described invention provides an electrolytic cell and process for the production of hydrogen peroxide solution and hypohalide by electrolysis, whereby hypohalide and hydrogen peroxide are produced in an anode chamber and a cathode chamber, respectively. The invention specifically relates to a seawater treatment method where both the desired products hydrogen peroxide and hypochlorous acid are reintroduced into the seawater to efficiently treat the water. However, the invention necessitates the use of a dual chamber device, and hydrogen peroxide would not be suitable for a daily hand sanitizing formulation.

Electrochemical devices have also been used previously to produce strong acid sterilizing liquids. One such device for use in water treatment facilities utilizes an apparatus for generating and dispensing a strong acid sterilizing liquid which contains hypochlorous acid at low concentrations and whose pH is 3 or less. In that apparatus, salt water is passed through a channel formed between a positive electrode plate and a negative electrode plate disposed to face opposite surfaces of a barrier membrane in which DC voltage is applied between the electrodes to electrolyze the salt water. The barrier membrane prevents the mixing of the products at the positive electrode and the products at the negative electrode. Acid liquid containing hypochlorous acid can be obtained by taking the aqueous solution flowing through the space between the barrier membrane and the positive electrode out of the electrolytic cell.

In another method directed toward obtaining a low pH aqueous acid solution, also using a two-chamber-type electrolytic cell device, a strong acid water containing a reduced amount of chloride for use in sterilization is produced whereby chloride ions are oxidized at the anode. With this apparatus, as with the previously described invention, the end product is desired to have a pH less than 3 and therefore is not suitable for a daily hand sanitizing formulation.

Chlorination is long known as a method for killing undesirable microorganisms. Chlorine may be provided in multiple forms including chlorine gas (Cl₂), a relatively cheap and highly effective antimicrobial agent; however, it is also a highly toxic and corrosive gas. Hypochlorites, such as NaOCl or Ca(OCl)₂, are a much safer alternative, but are considerably more expensive than gaseous chlorine. Finally, hypochlorite solutions (i.e., bleach) may also be utilized; however, these are rarely used in large scale applications because they are bulky and hazardous. Regardless of the chlorine source, hypochlorous acid (HClO) and the hypochlorite ion (OCl⁻) are the final desirable antimicrobial products. In any application for a hand sanitizer, however, hypochlorous acid is preferred for safe use in contact with human skin.

Beyond safety, the bactericidal activity of an aqueous solution of hypochlorous acid needs to be considered, particularly for use in disinfectant applications. The composition of an aqueous solution of hypochlorous acid varies with the pH of the solution because the form of chlorine compounds dissolved in the aqueous solution varies with pH. At low pH, typically above pH 3, HClO is the predominant form, while at high pH, typically above pH 8, OCl⁻ predominates. The HClO form is about 80 times more effective than OCl⁻ for killing microorganisms because HClO crosses cell membranes easier than the hypochlorite ion.

When the pH of an aqueous solution of hypochlorous acid is 8 or more, or the aqueous solution of hypochlorous acid is alkaline, hypochlorous acid ions (ClO⁻) having fairly low bactericidal activity are mainly present in the aqueous solution. Thus, the bactericidal activity of an alkaline aqueous solution of hypochlorous acid is fairly low.

When the pH of aqueous solution of hypochlorous acid is 7 or less, or the aqueous solution of hypochlorous acid is acidic, the amount of hypochlorous acid (HClO) having a bactericidal activity 10 to 100 times larger than that of hypochlorite ions is larger than the amount of hypochlorite ions. Thus, the bactericidal activity of an acidic aqueous solution of hypochlorous acid is high.

When the pH of an aqueous solution of hypochlorous acid is between 3 and 5.5, substantially 100% of the chlorine compound dissolved in the aqueous solution is hypochlorous acid. Thus, the bactericidal activity of the aqueous solution of hypochlorous acid becomes even higher.

When the pH of an aqueous solution of hypochlorous acid is 3 or less, a part of the chlorine compound dissolved in the aqueous solution becomes chlorine gas (Cl₂) having yet higher bactericidal activity than that of hypochlorous acid. Thus, the bactericidal activity of the aqueous solution of hypochlorous acid becomes even higher. However, human skin may be damaged by application of acid sterilizing liquid of such a low pH.

It would be desirable to control the pH of the chlorinated solution to increase the antimicrobial effectiveness of the chlorination process and also to ensure safety for uses such as hand sanitizer. Previous processes and systems for adjusting the pH of a water stream have been described. These processes include using carbon dioxide by injection into water by a direct gas feed, or bubbler; or in another method for injecting carbon dioxide into water by aspirating the carbon dioxide into a stream of water using a Venturi-type eductor. It is, however, difficult to control the efficiency of the carbon dioxide gas usage and these processes are inherently inefficient.

US 6 547 947 B1 discloses an electrolytic device for the generation of hydrochloride acid in aqueous solution, the device comprising a liquid chamber having an inlet for receiving an aqueous hydrochloric acid solution, the liquid chamber having an exterior wall and a solid anode providing for the oxidation of the halide ions, and a gas permeable cathode providing for the reduction of oxygen to yield hydrogen peroxide, a hydrphobic material and a hydrophilic material being scatteringly deposited on the cathode surface.

GB 1 567 274 A discloses a method for the generation of hypochlorite comprising: oxidizing sodium chloride in the presence of water within a single liquid chamber to form an aqueous solution of sodium hypochlorite, feeding oxygen through a gas permeable cathode to reduce the oxygen in the presence of water to form hydroxyl ions, wherein the gas permeable cathode forms at least a portion of an exterior wall of the single liquid chamber.

US 2006/0054510 A1 discloses a hypochlorous acid generator including an anode chamber for receiving a brine solution and for providing hypochlorous acid and a cathode chamber for generating a catholyte, and including a catholyte recirculating pump in fluid communication with the cathode chamber and anode chamber.

US 2007/0138020 A1 discloses an electrochemical process for the production of sodium hypochlorite in a two-chamber cell, in which part of sodium hydroxide at the catholyte is transported to the anolyte compartment of the cell to control anolyte pH and produce sodium hypochlorite solution.

It is a first object of the present invention to provide a electrolytic device to produce an efficient hypohalous acid compound. According to this first aspect, the present invention provides an electrolytic device for the generation of hypohalous acid in aqueous solutions, the device comprising: an anolyte chamber having an inlet for receiving an aqueous solution containing halide ions therein, the anolyte chamber having an exterior wall and a solid anode contained within the anolyte chamber providing for the oxidation of the halide ions to provide an anolyte effluent of hypohalous acid; a catholyte chamber having an inlet for receiving an aqueous electrolyte, wherein the catholyte chamber is defined by at least one exterior wall or portion thereof comprising a gas permeable cathode, the cathode having a hydrophobic surface for receiving oxygen from outside the catholyte chamber and a hydrophilic surface allowing for reduction of dioxygen to provide a catholyte effluent of hydroxyl ions in solution; and an ionomeric membrane for partitioning the anolyte chamber from the catholyte chamber; wherein the anolyte chamber further includes an outlet for receiving the exiting anolyte effluent; wherein the catholyte chamber includes an outlet for releasing any reacted catholyte effluent remaining in the catholyte chamber to mix with the exiting anolyte effluent; and wherein a pH control for determining and regulating the pH of the exiting mixed anolyte and catholyte effluents includes a valve for regulating the flow of the catholyte effluent through the outlet exiting from the catholyte chamber and a recirculator for recirculating the flow of the exiting mixed anolyte and catholyte effluents back into the anolyte chamber when the mixed anolyte and catholyte effluents have a pH that is greater than 9.

It is a second object of the present invention to provide a method to produce an efficient hypohalous acid compound. According to this second aspect, the present invention provides a method for the generation of hypohalous acid in an electrolytic device (300) according to the first aspect, the method comprising: oxidizing halide ions in the presence of water within an anolyte chamber to form an anolyte effluent containing hypohalous acid; feeding oxygen through a gas permeable cathode to reduce the oxygen in the presence of water to form a catholyte effluent containing hydroxyl ions, wherein the gas permeable cathode forms at least a portion of an exterior wall of a catholyte chamber; regulating the pH of the anolyte effluent of the hypohalous acid by mixing the catholyte effluent containing the hydroxyl ions with the anolyte effluent in an amount sufficient to complete the electrical circuit within the device to produce hypohalous acid and to increase the pH of the hypohalous acid such that the pH is between about 4 and 9; regulating the pH of the anolyte effluent of the hypohalous acid by recirculating the flow of the anolyte effluent of the hypohalous acid back to the anolyte chamber (312) if the pH of the hypohalous acid is above 9; and removing the hypohalous acid for use in disinfectant applications.

By way of example and to make the description more clear, reference is made to the accompanying drawings in which:
Fig. 1A is a schematic diagram illustrating an electrolytic device; and
Fig. 1B is a schematic diagram of a gas diffusion electrode; and
Fig. 2 is a cross-sectional view of the device describing one embodiment including a single liquid chamber, a gas compartment, and a pH control; and
Fig. 3 is a three-dimensional representation of an alternative embodiment of Fig. 2 whereby the gas compartment encircles the single liquid chamber;
Fig. 4 is a three-dimensional representation of another alternative embodiment of Fig. 2 whereby the single liquid chamber encircles the gas compartment; and
Fig. 5 is a cross-sectional view of an embodiment of the invention in which a dual chamber device includes an anolyte chamber and a catholyte chamber, wherein the gas permeable cathode serves as at least a portion of the exterior wall of the catholyte chamber; the device further includes a recirculator and a pH control.

### PREFERRED EMBODIMENT FOR CARRYING OUT THE INVENTION

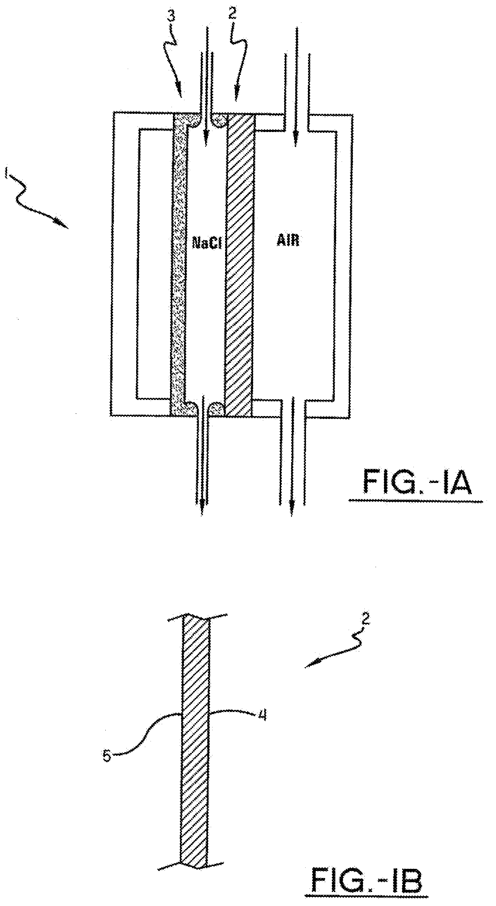

Examples of the process for the production of hypohalous acid in aqueous solution will be described hereinafter. One embodiment provides an electrolytic device 1 for the production of pH-regulated hypohalous acid aqueous solutions in a single liquid chamber as shown in schematic diagram Figure 1A. In the electrolytic device 1 for use in the process, operation of the electrosynthetic reactor relies on the use of a DC constant current power supply connected to the gas diffusion electrode 2 to induce reduction of dioxygen to water and to the anode 3 to promote oxidation of chloride ion to generate, for example, HClO. In this electrolytic cell, electricity is consumed to produce chemicals. In Figure 1B, the gas diffusion electrode 2, also known interchangeably here within as a gas permeable cathode, which acts as a current collector, has a hydrophobic surface 4 which faces air, or some gaseous source of oxygen, on the outside to prevent liquid from filtering through the structure. The gas diffusion electrode 2 further has a hydrophilic surface 5 which faces the electrolyte and allows for the electrocatalytic surface, where the actual reduction of dioxygen occurs, to form.

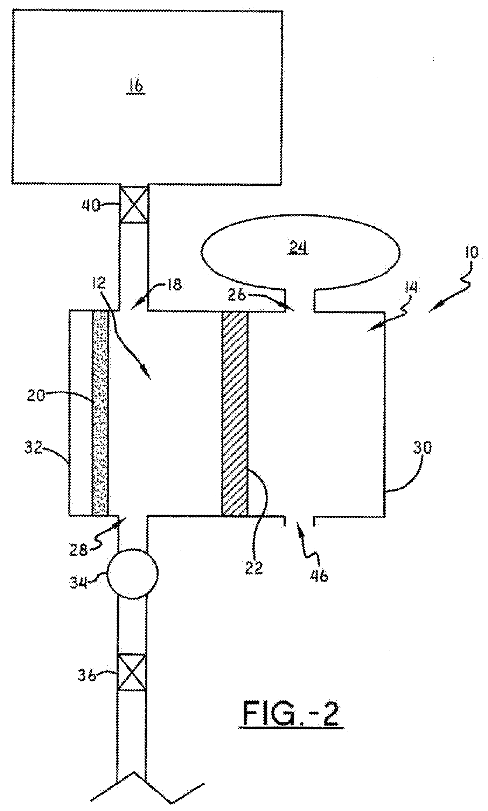

One representative form of an electrolytic device for the generation of hypohalous acid is shown in the cross-sectional view of Figure 2 and is denoted by the numeral 10. Electrolytic device 10 includes a single liquid chamber 12 and a gas compartment 14. A halide ion source in aqueous solution, such as NaCl solution or seawater, preferably freed of organic material thereby avoiding the oxidation reaction of organic material in the single liquid chamber, is supplied to the electrolytic cell single liquid chamber 12 by way of a gravity feed container or pump 16 through an inlet 18 for receiving aqueous solutions containing halide ions. The gravity feed container 16 may be made of any material, such as plastic or glass, which is nonreactive with the buffered or unbuffered solution to be fed through the electrosynthetic reactor. Valve 40 regulates flow through inlet 18 feeding into the single liquid chamber 12.

The single liquid chamber 12 has a single liquid chamber exterior wall 32 and a solid anode 20 contained within the single liquid chamber 12 providing for the oxidation of the halide ions to produce hypohalous acid in aqueous solution. Alternatively, the solid anode 20 could be the wall, or a portion thereof, of the container, as it is not necessary that the anode be immersed fully in the electrolyte.

The solid anode 20 used may be, for example, a dimensionally stable anode (DSA), commercially available from a supplier such as De Nora Tech. The gas permeable cathode 22 forms a portion of the single liquid chamber exterior wall 32 and provides for the reduction of oxygen to provide hydroxyl ions in solution within the single liquid chamber which will then mix with the products of the anode. The cathode, having a hydrophobic surface for receiving oxygen from outside the single liquid chamber 12 and a hydrophilic surface allowing for reduction of dioxygen, used may be, for example, a gas diffusion electrode (GDE), commercially available from various suppliers including BASF Fuel Cell, Inc., containing high area carbon and high area Pt (platinum) as the electrocatalyst. The use of an electrocatalyst is desired to reduce the overall power consumption of the electrolytic device by reducing the overvoltage required to reduce dioxygen to water. Other electrocatalysts, such as certain metals and oxides including species derived from the pyrolysis of certain organic materials, may be used as well, and are generally to be used in porous form. Alternatively, the catalyst may be supported on a plate, metal gauge, sintered powder or sintered metal fiber of a corrosion-resistant material such as stainless steel, zirconium, silver and carbon. By forming a hydrophobic sheet on the side of the cathode opposite the single liquid chamber, access of gas to the reactive surface can be enhanced.

In one alternative, the exterior of the single liquid chamber 12 as defined by the gas permeable cathode 22 may be exposed to atmospheric air. In another embodiment, as shown in Figure 2, the electrolytic device 10 may further include an oxygen source 24 for providing oxygen to the gas permeable cathode 22 through a gas compartment 14. The oxygen source 24 may be air, a commercially available oxygen cylinder, oxygen produced by the electrolysis of water in a separately installed electrolytic cell, or oxygen obtained by concentrating air by a PSA (pressure swing adsorption) device; and this oxygen source 24 may also include a pump to force the oxygen toward the hydrophobic surface of the gas permeable cathode. The gas compartment 14 further includes an inlet 26 for receiving oxygen through gas compartment exterior wall 30; whereby the gas compartment 14 has at least one gas compartment exterior wall 30 that encloses the portion of the single liquid chamber exterior wall comprised of the gas permeable cathode 22. An outlet 46 enables any overpressure of oxygen or air to leave the system.

Within the single liquid chamber, the products of the reactions at the interfaces between the solid anode 20 and the gas permeable cathode 22 combine to yield an exiting effluent hereby also referred to as a mixed effluent.

In an example whereby the hypohalous acid produced is hypochlorous acid, and the halide ions are chloride ions, anodic oxidation takes place in the single liquid chamber 12 to produce HClO via the oxidation of chloride ion:

Cl⁻ + H₂O → HClO + 2e⁻ + H⁺

While in the presence of water, the chlorine gas Cl₂ (which forms first) instantaneously transforms to HClO yielding results corresponding to the above reaction. The gas permeable cathode 22 is responsible for the reduction of dioxygen to water according to this equation:

O₂ + 2H₂O + 4e⁻ → 4OH⁻

The electrochemical reactions occur at or near the interfaces between the electrodes and the electrolyte solution, not in the aqueous stream. The products are all water soluble.

The single liquid chamber 12 further includes an outlet 28, through which the exiting mixed effluent leaves the single liquid chamber 12 through single liquid chamber exterior wall 32, thereafter, the exiting effluent passes through a pH sensing electrode or pH meter, denoted in Fig. 2 as 34, for determining the pH of the exited mixed effluent; the desirable pH range for use as a hand sanitizer is between about 4 and 9. It may be appreciated that an error-sensing feedback device, or servo, may also be included to further aid in regulating the pH. The pH meter for measuring the pH incorporates a valve 36, which may be an electrically actuated valve, which then directs the exit stream out for use as product when the effluent solution has a pH between about 4 and 9.

In the embodiment as depicted in Figure 2 and utilizing a single liquid chamber, it is possible to manage or control pH by altering the current applied by the DC constant current power supply to the circuit or, alternatively, by adding a buffering agent to adjust the pH of the electrolyte solution halide feed as necessary.

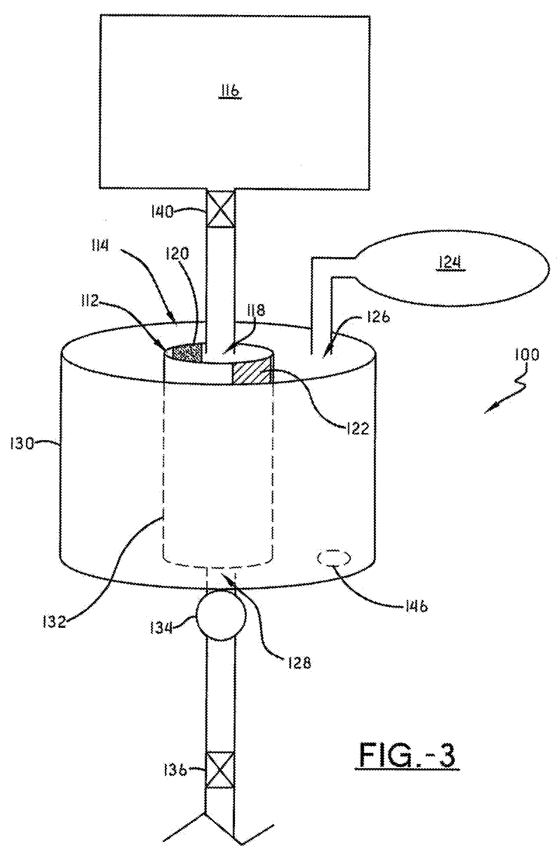

Another representative form of an electrolytic device for the generation of hypohalous acid is shown in the three-dimensional view of Figure 3 and denoted by the numeral 100. The electrolytic device is similarly equipped as is the single liquid chamber device of Figure 2; however Figure 3 demonstrates the configuration of the gas compartment 114 as is possible with a cylindrical gas compartment exterior wall 130. The single liquid chamber 112 may also be cylindrical and is contained within the gas compartment 114. The single liquid chamber 112 of the electrolytic cell 100 has a solid anode 120 and a single liquid chamber exterior wall 132, which may also serve as the interior wall of gas compartment 114. The single liquid chamber exterior wall 132 encloses the single liquid chamber 112, leaving an opening for the gas permeable cathode 122 to serve as a portion of the single liquid chamber exterior wall 132. As the solid anode 120 need not be entirely immersed in the electrolyte contained within the single liquid chamber 112, the solid anode 120 may alternatively serve as a portion of the wall as defined by single liquid chamber 112, provided the anode is not placed at the same position in which the gas permeable cathode 122 is located.

As with the embodiment described in Figure 2, the electrolytic device in Figure 3 has a gravity feed container or pump 116 and an inlet 118 for feeding halide ions in aqueous solution into the single liquid chamber 112. A valve 140 further regulates flow from the gravity feed container or pump 116 into the single liquid chamber 112. The mixed effluent exits the single liquid chamber through single liquid chamber exterior wall 132 passing through an outlet 128 which leads the exit stream through a pH sensing device or pH meter, denoted as 134 in Fig. 3, for determination of pH. Further, an error-sensing feedback device, or servo, may also be included. A valve 136 thereby directs the fluid out of the system for use as end product if desired pH range between about 4 and 9 is attained. The gas compartment 114 has a gas compartment exterior wall 130 which may serve to enclose the electrolytic device 100. An inlet 126 feeds oxygen from an oxygen source 124 into the gas compartment 114 for reactions to occur at or near the interface with the gas permeable cathode 122; an outlet 146 allows for release of any overpressure of air or oxygen as necessary.

It is also possible, as with the device in Figure 2, that alternatively the device shown in Figure 3 may be exposed to atmospheric air rather than to utilize a gas compartment for introducing oxygen to the gas permeable cathode. Also, as with the single liquid chamber electrolytic cell of Figure 2, pH of the mixed effluent may best be controlled or optimized by adjusting the current applied by the DC constant current power supply to the circuit, or alternatively by adding a buffering agent to adjust the pH of the electrolyte solution halide feed as necessary.

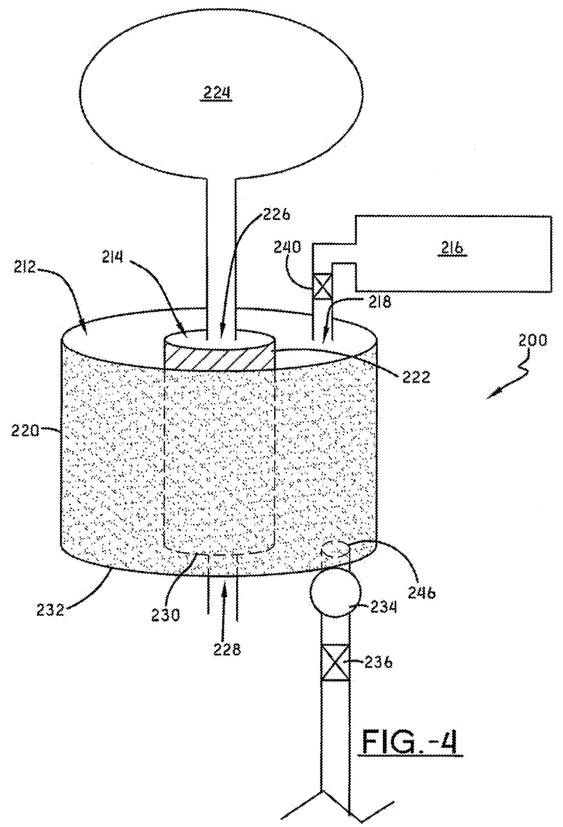

Figure 4 is further an alternate representative form of an electrolytic device, denoted as device 200, for the generation of hypohalous acid and is shown in the three-dimensional view. The electrolytic device is similarly configured as is the single liquid chamber device of Figure 3; however Figure 4 demonstrates the positioning of the gas compartment 214 as the internal cylinder as is possible using the gas permeable cathode 222 as the external wall of the gas compartment. The single liquid chamber 212 may also be cylindrical and may encircle the gas compartment 214; thereby the solid anode 220 forms the single liquid chamber exterior wall while the gas permeable cathode 222 serves as the interior wall of single liquid chamber.

As with the embodiment described in Figure 3, the electrolytic device of Figure 4 has a gravity feed container or pump 216 and an inlet 218 for feeding halide ions in aqueous solution into the single liquid chamber 212. A valve 240 further regulates flow from the gravity feed container or pump 216 into the single liquid chamber 212. The mixed effluent exits the single liquid chamber through the bottom face of single liquid chamber exterior wall 232 passing through an outlet 246 which leads the exit stream through a pH sensing device or pH meter 234, for determination of pH. An error-sensing feedback device, or servo, may also be included. A valve 236 thereby directs the fluid out of the system for use as end product if desired pH range between about 4 and 9 is attained. The gas compartment 214 has a gas compartment exterior wall 230 at top and bottom face and an inlet 226 which feeds oxygen from an oxygen source 224 into the gas compartment 214 for reactions to occur at or near the interface with the gas permeable cathode 222; an outlet 228 allows for release of any overpressure of air or oxygen as necessary.

As with the single liquid chamber electrolytic cell devices of Figures 2 and 3, pH of the mixed effluent may best be controlled or optimized by adjusting the current applied by the DC constant current power supply to the circuit, or alternatively by adding a buffering agent to adjust the pH of the electrolyte solution halide feed as necessary.

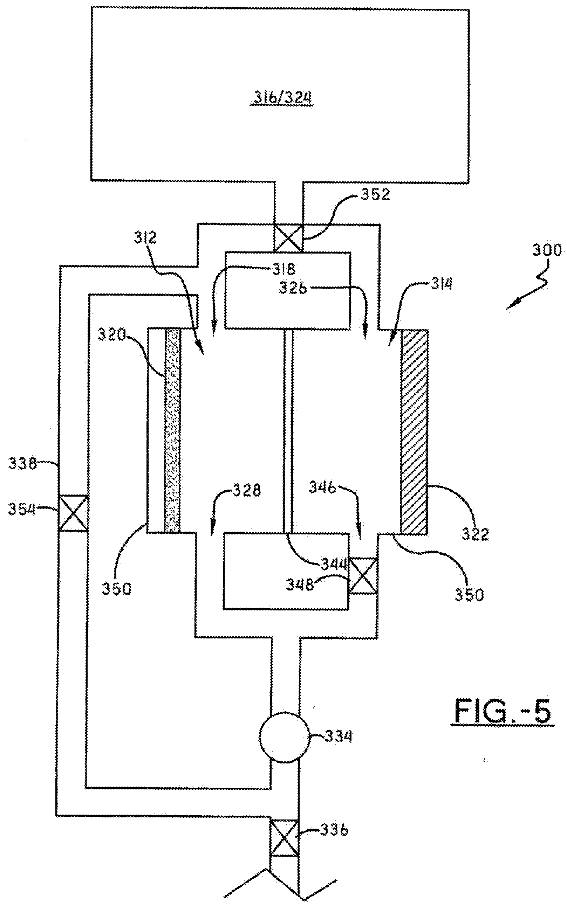

Figure 5 describes a representative form of an inventive electrolytic device 300 for the generation of hypohalous acid; whereby this dual chamber device has an anolyte chamber and a catholyte chamber. The cell has an exterior wall 350, wherein the gas permeable cathode 322 is positioned as at least a portion of the exterior wall of the catholyte chamber 314. The electrolytic device 300 has an anolyte chamber 312 which has an inlet 318 for receiving an aqueous solution of halide ions therein. As shown in this embodiment, the anolyte chamber 312 has a solid anode 320 contained within the anolyte chamber providing for the oxidation of the halide ions to produce an anolyte effluent of hypohalous acid in aqueous solution. The solid anode 320 may be placed within the anolyte chamber as shown or alternatively serve as an impermeable wall, or portion thereof, of the anolyte chamber, as it is not necessary that the anode be fully immersed in the electrolyte. However, the solid anode 320 cannot form the part of the anolyte chamber wall that separates the anolyte chamber 312 from the catholyte chamber 214.

In this dual chamber configuration, the gas permeable cathode 322 can be positioned such that the catholyte chamber 314 has at least one wall that includes at least, in part, the gas permeable cathode 322. The cathode has a hydrophobic surface for receiving oxygen from outside the catholyte chamber 314 and a hydrophilic surface allowing for reduction of dioxygen and for maintaining the aqueous-based catholyte effluent within the catholyte chamber 314 of the electrolytic device 300.

Furthermore, the cell as shown in Figure 5 has an ionomeric membrane 344 to partition the two liquid chambers, i.e., the anolyte chamber 312 and the catholyte chamber 314. The membrane may be a neutral membrane or an ion exchange membrane. The ionomeric membrane 344 may be an ion exchange membrane made of synthetic polymer, such as Nafion® available from DuPont, or alternatively a non ionomeric membrane of very fine porosity available from various sources, to prevent facile mixing of the anolyte and catholyte solutions. The Nafion membrane utilized in the present embodiment allows the sodium cations (Na⁺) to transfer from the anolyte chamber to the catholyte chamber with minimal electrical resistance, while minimizing back transfer of anions such as OH- from the catholyte chamber. The use of ionomeric membrane 344 separating the anolyte chamber 312 and the catholyte chamber 314 makes it possible to prevent mixing of the liquids and also for the hypohalous acid to reach the cathode. While in operation, the anolyte chamber of the invention should contain, in addition to the reactant chloride, HClO and not any significant amount of the reduction products of dioxygen, i.e., catholyte effluent, that are produced in the catholyte chamber.

Separate inlets for feeding into the anolyte chamber 312 and catholyte chamber 314 are maintained by inlet 318 and inlet 326 respectively. While there are many ways to accomplish feeding the cell, it may be viewed as depicted in Figure 5 that the gravity feed container or pump 316 introducing aqueous NaCl or halide ion containing solution to the anolyte chamber 312 could further include a source 324 for providing liquid water or another aqueous solution to the catholyte chamber 314. In this manner, the flow of liquids fed to the device may be managed by a valve 352 to regulate input to either the anolyte chamber 312 or catholyte chamber 314 separately.

In the dual chamber embodiment of the invention as shown in Figure 5, and whereby the hypohalous acid produced is hypochlorous acid, and the halide ions are chloride ions, anodic oxidation takes place in the anolyte chamber 312 to produce HClO via the oxidation of chloride ion:

Cl⁻ + H₂O → HClO + 2e⁻ + H⁺ While in the presence of water, chlorine gas Cl₂ (which forms first) instantaneously transforms to HClO yielding results corresponding to the above reaction. Sodium cations (Na⁺) may pass from the anolyte chamber 312 through the membrane 344 into the catholyte chamber 314. The hydrophilic side of the gas permeable cathode 322 in the catholyte chamber 314 is responsible for the reduction of dioxygen to water according to this equation:

O₂ + 2H₂O + 4e⁻ → 4OH⁻

The electrochemical reactions occur at or near the interfaces between the electrodes and the electrolyte solution, not in the aqueous stream. The products are all water soluble.
In this dual liquid chamber device, the sodium cations may migrate through the membrane 344 from the anolyte chamber 312 to the catholyte chamber 314 with minimal electrical resistance. In the catholyte chamber 314, the sodium cations and hydroxyl groups remain as such dissolved in water to yield the catholyte effluent.

In an alternative cylindrical embodiment not shown, drawn similarly to the single chamber device concept shown in Figure 3, the anolyte chamber of the dual chamber device may have an exterior wall, corresponding to the wall 132 as described in Figure 3, that is formed completely or substantially of the membrane. In such a cylindrical configuration of the dual chamber device, the gas permeable cathode may act as an exterior catholyte chamber wall, or a portion thereof, which would correspond similarly to the wall 130 as described in Figure 3.

In the embodiment of the invention as depicted in Figure 5, the anolyte chamber 312 and catholyte chamber 314 further include outlets 328 and 346, respectively, to progress the anolyte and catholyte effluents through as desired to the exit stream at a controlled pH. Control of pH may be accomplished by regulating the volume of catholyte effluent introduced to the exit stream utilizing valve 348 which will be discussed further below. The pH may be measured by a pH sensing device or pH meter 334 for determining pH, while valve 348 may be adjusted for regulating the pH of the exiting anolyte effluent to between about 4 and 9.

The catholyte chamber 314 may contain unreacted aqueous solution, e.g., water and/or reacted catholyte. The electrolytic device further includes an outlet 346 for releasing reacted catholyte effluent remaining in the catholyte chamber 314. It will be appreciated that any reacted catholyte effluent will be alkaline in nature. A valve 348 regulates flow of the catholyte effluent through outlet 346 exiting from the catholyte chamber; thereafter the exiting catholyte is mixed with the exiting anolyte effluent to form a mixed effluent of higher pH than of the anolyte effluent alone. The mixed effluent may be measured with pH sensing device or pH meter 334. The pH control, which may also include a computer controlled servo, makes it possible to regulate the flow of the exiting liquid which passes through valve 336 to be in the desired range of pH between about 4 and 9. In practice, the pH meter 334 placed at the exit stream measures the pH of the exiting effluent. If the exiting effluent is too acidic, valve 348 may be opened to allow catholyte to flow also, thereby, introducing the alkaline solution to the exit stream. Repeated adjustments to regulate the catholyte effluent flow to combine with the effluent of the anolyte released may be made as necessary until the exiting solution reaches the desired pH range between about 4 and 9.

Further, the pH may be controlled by recirculating the anolyte or the mixed anolyte and catholyte effluent through a recirculator 338 back into inlet 318 for reintroduction into the anolyte chamber 312. As depicted in Figure 5, the recirculator 338 has a valve 354 which allows the flow of the exiting anolyte effluent or mixed anolyte and catholyte effluent to be redirected back into the anolyte chamber 312 when the anolyte effluent or mixed anolyte and catholyte effluent has a pH that is greater than 9; or the flow may be redirected back into the anolyte chamber when the exiting anolyte effluent or mixed anolyte and catholyte effluent have a pH that is less than 4. In other words, to control pH, recirculating catholyte-containing effluent, or OH⁻ in aqueous solution, back into the anolyte chamber increases pH (to 5, to 6, to 7, up to 8). Alternatively, pH control may be achieved by recirculating exiting anolyte effluent back into the electrolyte within the anolyte chamber to decrease pH. Thereby attainment of the desired pH within the hypohalous acid solution end product may be in these ranges: preferred between 4-9; more preferred between 5-8; more preferred between 5-6; pKₐ of HClO is 7.5. To further control pH, the electrolytic device may allow for a buffering agent to be released through inlet valve 318 into the anolyte chamber of aqueous solution containing halide ions. Also, as with the single liquid chamber design discussed previously, pH control of the dual chamber device may also be attained by optimizing current to the circuit as applied by the DC constant current power.

Whereas Figure 5 depicts a device open to atmospheric air to provide air to the gas permeable cathode 322 from outside of the inventive cell, it may be alternatively possible to have a gas compartment to feed air or oxygen to the gas permeable cathode 322 similarly as described in Figures 2 and 3. The oxygen source may include a pump to force the oxygen toward the hydrophobic surface of the gas permeable cathode 322.

In all embodiments, the electrolytic cell 10, 100, 200, 300 is preferably made of a glass lining material, carbon, or corrosion-resistant titanium, stainless steel or PTFE resin from the standpoint of durability and stability.

Examples of the process of the invention for the production of HClO solution will be described hereinafter, but the invention should not be construed as being limited thereto.

### Example 1

As shown experimentally in the laboratory of the assignee, one embodiment of a single liquid chamber device (not according to the present invention) of the type described in Figure 1 delivers, as desired, HClO solutions of concentrations in the range 80 - 240 ppm chlorine at pH 5.9 - 7.8 as shown in Table 1. The operation of the electrosynthetic reactor relies on the use of a DC constant current power supply connected to the GDE cathode (E-Tek ELAT® GDE LT250EW; 10 cm x 10 cm) to induce reduction of dioxygen to water and the oxidation of chloride ion at the DSA anode to generate HClO. Prior to connecting and turning on the power supply, the electrosynthetic reactor is filled with either buffered or unbuffered NaCl solution from the gravity feed container and the flow rate adjusted with a manual valve to 2 - 12 ml per minute. Both the HClO concentrations, as well as the pH of the effluent solution, are measured by conventional instrumentation and methods at various time intervals during continuous operation, as a function of the flow rate, applied current and other relevant parameters.

**Table 1. Hypochlorous Acid Generation in Electrolytic Cell**

| 5.0 g/L NaCl in pH 5.7, 10 mM Phosphate Buffer | | | | | |
|---|---|---|---|---|---|
| Trial # | NaCl Sol. Flow Rate, ml/min | DC Volts | DC mA | [Cl] ppm | pH |
| 393-89-1 | 8 | 3 | 120 | 80 | 6.2 |
| 393-89-2 | 7 | 3 | 120 | 105 | 5.9 |
| 393-89-3 a) | 6 | 3.5 | 190 | 185 | 5.9 |
| 393-89-4 a) | 6 | 3.5 | 170 | 195 | 5.9 |
| 393-89-5 b) | 10 | 3.9 | 250 | 160 | 6.2 |
| 393-89-6 b) | 8 | 3.9 | 240 | 190 | 6.1 |
| 393-89-7 | 8.5 | 4.9 | 400 | 230 | 6.2 |
| 393-89-8 | 7.5 | 4.9 | 380 | 225 | 6.2 |

| 5.0 g/L NaCl in Deionized Water | | | | | |
|---|---|---|---|---|---|
| 393-89-9 | 7 | 3.9 | 270 | 170 | 6.5 |
| 393-89-10 | 10 | 3.9 | 250 | 170 | 8 |
| 393-89-11 c) | 10.5 | 4.6 | 340 | 240 | 6 |
| 393-89-12 c) | 10.5 | 4.6 | 320 | 190 | 7.2 |
| 393-89-13 c) | 11 | 5 | 390 | 210 | 7.8 |

In the present device, a method for the generation of hypohalous acid comprising oxidizing halide ions in the presence of water within a single liquid chamber to form an anolyte effluent is achieved. On the cathode side, oxygen is being fed through, or in the case of utilizing a pump being forced through, a gas permeable cathode to reduce the oxygen in the presence of water to form hydroxyl groups. In this device the gas permeable cathode forms at least a portion of an exterior wall of the single liquid chamber. The step of mixing the hydroxyl groups in an amount sufficient to complete the electrolyte circuit within the device to produce hypohalous acid is achieved. The pH may be determined by a pH meter and the hypohalous acid may be removed from the electrolytic device. Control of pH may be attained by adjusting the current to the circuit as applied by the DC constant current power or by adding a buffering agent to the halide aqueous feed. Desired range for use as hand sanitizer is pH between about 4 and 9. The step of feeding oxygen to the gas permeable cathode may include delivering oxygen from a gas compartment, wherein the portion of the exterior wall of the single liquid chamber comprised of the gas permeable cathode is included in the gas compartment. Alternatively, the step of feeding oxygen to the gas permeable cathode may include exposing the hydrophobic exterior of the gas permeable cathode to atmospheric air.

A method of this invention utilizing a two liquid chamber electrolytic device for the generation of pH-controlled hypohalous acid aqueous solutions, such as HClO in aqueous solution, is achieved. The method includes, on the anode side, oxidizing halide ions in the presence of water within an anolyte chamber to form an anolyte effluent containing hypohalous acid. On the cathode side, oxygen is fed through a gas permeable cathode to reduce the oxygen in the presence of water to form a catholyte effluent containing hydroxyl groups, wherein the gas permeable cathode forms at least a portion of an exterior wall of a catholyte chamber. The hydroxyl groups are mixed in an amount sufficient to complete the electrolyte circuit within the device to produce hypohalous acid. This device allows for controlling pH of the hypohalous acid to ensure that the pH is between about 4 and 9. Determining the pH of the hypohalous acid may include use of a pH meter. The hypohalous acid may be removed from the electrolytic device.

The pH may be further controlled and regulated in the two liquid chamber electrolytic device, for example, by mixing the exiting anolyte and catholyte effluents in an amount sufficient to increase the pH of the hypohalous acid to ensure that the pH is between about 4 and 9. The method further comprises the step of determining the pH after mixing the exiting anolyte and catholyte effluents, wherein the step includes the use of a pH meter. This method is advantageous in that the pH of the hypohalous acid produced may be controlled to ensure that the pH is between about 4 and 9 before removing the hypohalous acid for use as end product.

Regulating the pH of the hypohalous acid produced by the two liquid chamber electrolytic device may further be accomplished by recirculating the flow of the hypohalous acid back into the anolyte chamber if the pH of the hypohalous acid is above pH 9; wherein the method further comprises the step of determining the pH of the hypohalous acid after recirculating the flow of the hypohalous acid back to the anolyte chamber, wherein the step includes the use of a pH meter.

In another embodiment, it will be appreciated that the user could also regulate the pH of the hypohalous acid produced by the dual liquid chamber of the electrolytic device if the pH is below 4 alternatively by (1) recirculating the flow of the hypohalous acid back to the anolyte chamber where the input from the feed may also be altered of buffered or (2) closing off the valve 354 shown in Figure 5 until the pH increases sufficiently above pH 4.

The step of feeding oxygen to the gas permeable cathode may include delivering oxygen from a gas compartment, wherein the portion of the exterior wall of the catholyte chamber comprised of the gas permeable cathode is included in the gas compartment. Alternatively, the step of feeding oxygen to the gas permeable cathode may include exposing the hydrophobic exterior of the gas permeable cathode to atmospheric air.

The method and device of this invention further has the advantage in that storage of gaseous species, such as chlorine gas, is not needed. Also, the source electrolyte is economical and safe for handling, while the end product may be directly used for disinfectant purposes at a controlled pH level suitable for use as a hand sanitizer without irritation or damage to human skin.

The pH may be further controlled and regulated in the two liquid chamber electrolytic device, for example, by mixing the exiting anolyte and catholyte effluents in an amount sufficient to increase the pH of the hypohalous acid to ensure that the pH is between about 4 and 9. The method further comprises the step of determining the pH after mixing the exiting anolyte and catholyte effluents, wherein the step includes the use of a pH meter. This method is advantageous in that the pH of the hypohalous acid produced may be controlled to ensure that the pH is between about 4 and 9 before removing the hypohalous acid for use as end product.

Regulating the pH of the hypohalous acid produced by the two liquid chamber electrolytic device may further be accomplished by recirculating the flow of the hypohalous acid back into the anolyte chamber if the pH of the hypohalous acid is above pH 9; wherein the method further comprises the step of determining the pH of the hypohalous acid after recirculating the flow of the hypohalous acid back to the anolyte chamber, wherein the step includes the use of a pH meter.

In another embodiment, it will be appreciated that the user could also regulate the pH of the hypohalous acid produced by the dual liquid chamber of the electrolytic device if the pH is below 4 alternatively by (1) recirculating the flow of the hypohalous acid back to the anolyte chamber where the input from the feed may also be altered of buffered or (2) closing off the valve 354 shown in Figure 5 until the pH increases sufficiently above pH 4.

The step of feeding oxygen to the gas permeable cathode may include delivering oxygen from a gas compartment, wherein the portion of the exterior wall of the catholyte chamber comprised of the gas permeable cathode is included in the gas compartment. Alternatively, the step of feeding oxygen to the gas permeable cathode may include exposing the hydrophobic exterior of the gas permeable cathode to atmospheric air.

The method and device of this invention further has the advantage in that storage of gaseous species, such as chlorine gas, is not needed. Also, the source electrolyte is economical and safe for handling, while the end product may be directly used for disinfectant purposes at a controlled pH level suitable for use as a hand sanitizer without irritation or damage to human skin.

In light of the foregoing, it should thus be evident that the process of the present invention, providing a device and method for producing hypohalous acid in aqueous solution with controlled pH, substantially improves the art. While, in accordance with the patent statutes, only the preferred embodiments of the present invention have been described in detail hereinabove, the present invention is not to be limited thereto or thereby. Rather, the scope of the invention shall include all modifications and variations that fall within the scope of the attached claims.

## Claims

1. An electrolytic device (300) for the generation of hypohalous acid in aqueous solutions, the device comprising:
an anolyte chamber (312) having an inlet (318) for receiving an aqueous solution containing halide ions therein, the anolyte chamber having an exterior wall (350) and a solid anode (320) contained within the anolyte chamber (312) providing for the oxidation of the halide ions to provide an anolyte effluent of hypohalous acid;
a catholyte chamber (314) having an inlet (326) for receiving an aqueous electrolyte, wherein the catholyte chamber (314) is defined by at least one exterior wall or portion thereof comprising a gas permeable cathode (322), the cathode having a hydrophobic surface for receiving oxygen from outside the catholyte chamber (314) and a hydrophilic surface allowing for reduction of dioxygen to provide a catholyte effluent of hydroxyl ions in solution;
and an ionomeric membrane (344) for partitioning the anolyte chamber (312) from the catholyte chamber (314);
wherein the anolyte chamber (312) further includes an outlet (328) for receiving the exiting anolyte effluent;
wherein the catholyte chamber (314) includes an outlet (346) for releasing any reacted catholyte effluent remaining in the catholyte chamber (314) to mix with the exiting anolyte effluent; and
wherein a pH control for determining and regulating the pH of the exiting mixed anolyte and catholyte effluents includes a valve (348) for regulating the flow of the catholyte effluent through the outlet (346) exiting from the catholyte chamber (314) and a recirculator (338) for recirculating the flow of the exiting mixed anolyte and catholyte effluents back into the anolyte chamber (312) when the mixed anolyte and catholyte effluents have a pH that is greater than 9.

2. The electrolytic device as claimed in claim 1, further including an inlet valve (352) for releasing a buffering agent into the anolyte chamber (312) of aqueous solution containing halide ions.

3. The electrolytic device as claimed in claim 1, wherein the pH of the mixed anolyte and catholyte effluents is regulated between about 5 and 8.

4. The electrolytic device as claimed in any of the aforesaid claims, wherein the solid anode (320) is a dimensionally stable anode and wherein the gas permeable cathode (322) is a gas diffusion electrode.

5. The electrolytic device as claimed in any of the aforesaid claims, further including a gas compartment for providing oxygen to the gas permeable cathode (322), wherein the gas compartment is defined by at least one exterior wall that encloses the portion of the exterior wall of the catholyte chamber (314) composed of the gas permeable cathode within the gas compartment.

6. A method for the generation of hypohalous acid in an electrolytic device (300) according to claim 1, the method comprising:
oxidizing halide ions in the presence of water within an anolyte chamber (312) to form an anolyte effluent containing hypohalous acid;
feeding oxygen through a gas permeable cathode (322) to reduce the oxygen in the presence of water to form a catholyte effluent containing hydroxyl ions, wherein the gas permeable cathode (322) forms at least a portion of an exterior wall of a catholyte chamber (314);
regulating the pH of the anolyte effluent of the hypohalous acid by mixing the catholyte effluent containing the hydroxyl ions with the anolyte effluent in an amount sufficient to complete the electrical circuit within the device to produce hypohalous acid and to increase the pH of the hypohalous acid such that the pH is between about 4 and 9;
regulating the pH of the anolyte effluent of the hypohalous acid by recirculating the flow of the anolyte effluent of the hypohalous acid back to the anolyte chamber (312) if the pH of the hypohalous acid is above 9; and
removing the hypohalous acid for use in disinfectant applications.

7. The method of claim 6, wherein the step of feeding oxygen through the gas permeable cathode (322) includes delivering oxygen from a gas compartment, wherein the portion of the exterior wall of the catholyte chamber (314) comprised of the gas permeable cathode (322) is included in the gas compartment.

8. The method of claim 6, wherein the step of regulating the pH of the anolyte effluent of the hypohalous acid further includes recirculating the flow of the anolyte effluent of the hypohalous acid back to the anolyte chamber (312) if the pH of the hypohalous acid is below 4.

## Patentansprüche

1. Elektrolytische Vorrichtung (300) zum Erzeugen von hypohalogeniger Säure in wässrigen Lösungen, wobei die Vorrichtung umfasst:
eine Anolytkammer (312) mit einem Einlass (318) zur Aufnahme einer Halogenidionen enthaltenden wässrigen Lösung, wobei die Anolytkammer eine Außenwand (350) und eine innerhalb der Anolytkammer (312) enthaltene Festkörperanode (320) aufweist, die für die Oxidation der Halogenidionen vorgesehen ist, um einen Anolytablauf von hypohalogeniger Säure bereitzustellen,
eine Katholytkammer (314) mit einem Einlass (326) zur Aufnahme eines wässrigen Elektrolyten, wobei die Katholytkammer (314) durch wenigstens eine Außenwand oder einen Teil davon definiert ist, umfassend eine gaspermeable Kathode (322), wobei die Kathode eine hydrophobe Oberfläche zur Aufnahme von Sauerstoff von außerhalb der Katholytkammer (314) und eine hydrophile Oberfläche aufweist, die eine Reduktion von Disauerstoff ermöglicht, um einen Katholytablauf von Hydroxidionen in Lösung bereitzustellen,
und eine Ionomermembran (344) zur Abtrennung der Anolytkammer (312) von der Katholytkammer (314),
wobei die Anolytkammer (312) ferner einen Auslass (328) zur Aufnahme des austretenden Anolytablaufs enthält,
wobei die Katholytkammer (314) einen Auslass (346) zur Freisetzung jeglichen reagiertem, in der Katholytkammer (314) verbleibendem Katholytablaufs umfasst, um ihn mit dem austretenden Anolytablauf zu mischen,
wobei eine pH-Kontrolle zur Bestimmung und Regulierung des pH der auslaufenden gemischten Anolyt- und Katholytabläufe ein Ventil (348) zum Regulieren des aus der Katholytkammer auslaufenden (314) Stroms an Katholytablauf durch den Auslass (346) und einen Rezirkulator (338) zum Rezirkulieren des Stroms an auslaufenden gemischten Anolyt- und
Katholytabläufen zurück in die Anolytkammer (312), wenn die gemischten Anolyt- und Katholytabläufe einen pH aufweisen, der größer ist als 9.

2. Elektrolytische Vorrichtung nach Anspruch 1, ferner enthaltend ein Einlassventil (352) zur Freisetzung eines Puffer-Wirkstoffs in die Anolytkammer (312) der Halogenidionen enthaltenden wässrigen Lösung.

3. Elektrolytische Vorrichtung nach Anspruch 1, wobei der pH der gemischten Anolyt- und Katholytabläufe zwischen etwa 5 und 8 reguliert wird.

4. Elektrolytische Vorrichtung nach einem der vorherigen Ansprüche, wobei die Festkörperanode (320) eine maßbeständige Anode ist und wobei die gaspermeable Kathode (322) eine Gasdiffusionselektrode ist.

5. Elektrolytische Vorrichtung nach einem der vorherigen Ansprüche, ferner enthaltend eine Gasabteilung zur Bereitstellung von Sauerstoff an die gaspermeable Kathode (322), wobei die Gasabteilung durch wenigstens eine Außenwand definiert wird, die den Teil der Außenwand der Katholytkammer (314) umschließt, der die gaspermeable Kathode innerhalb der Gasabteilung umfasst.

6. Verfahren zum Erzeugen von hypohalogeniger Säure in einer elektrolytischen Vorrichtung (300) nach Anspruch 1, wobei das Verfahren umfasst:
Oxidieren von Halogenidionen in der Gegenwart von Wasser innerhalb einer Anolytkammer (312), um einen Anolytablauf zu bilden, der hypohalogenige Säure enthält,
Speisen von Sauerstoff durch eine gaspermeable Kathode (322), um den Sauerstoff in der Gegenwart von Wasser zu reduzieren, um einen Katholytablauf zu bilden, der Hydroxidionen enthält, wobei die gaspermeable Kathode (322) wenigstens einen Teil einer äußeren Wand einer Katholytkammer (314) bildet,
Regulieren des pH des Anolytablaufs der hypohalogenigen Säure durch Mischen des die Hydroxidionen enthaltenden Katholytablaufs mit dem Anolytablauf in einer Menge, die ausreicht, um den elektrischen Kreislauf innerhalb der Vorrichtung zu vervollständigen, um hypohalogenige Säure herzustellen und den pH der hypohalogenigen Säure derart zu erhöhen, dass der pH zwischen etwa 4 und 9 liegt,
Regulieren des pH des Anolytablaufs der hypohalogenigen Säure durch Rezirkulieren des Stroms an Anolytablauf der hypohalogenigen Säure zurück zur Anolytkammer (312), wenn der pH der hypohalogenigen Säure über 9 liegt, und
Entfernen der hypohalogenigen Säure zur Verwendung bei einer Desinfektionsanwendung.

7. Verfahren nach Anspruch 6, wobei der Schritt des Speisens von Sauerstoff durch die gaspermeable Kathode (322) das Zuführen von Sauerstoff aus einer Gasabteilung beinhaltet, wobei der Teil der Außenwand der Katholytkammer (314), der die gaspermeable Kathode (322) umfasst, in der Gasabteilung enthalten ist.

8. Verfahren nach Anspruch 6, wobei der Schritt des Regulierens des pH des Anolytablaufs der hypohalogenigen Säure ferner das Rezirkulieren des Stroms des Anolytablaufs der hypohalogenigen Säure zurück zur Anolytkammer (312) beinhaltet, wenn der pH der hypohalogenigen Säure unter 4 liegt.

## Revendications

1. Dispositif électrolytique (300) pour la génération d'acide hypohaleux en solutions aqueuses, le dispositif comprenant :
une chambre d'anolyte (312) ayant une entrée (318) pour réceptionner une solution aqueuse contenant des ions halogénure, la chambre d'anolyte ayant une paroi extérieure (350) et une anode solide (320) présente dans la chambre d'anolyte (312) effectuant l'oxydation des ions halogénure pour donner un effluent anolyte d'acide hypohaleux ;
une chambre de catholyte (314) ayant une entrée (326) pour réceptionner un électrolyte aqueux, où la chambre de catholyte (314) est définie par au moins une paroi extérieure ou une partie de celle-ci comprenant une cathode perméable aux gaz (322), la cathode ayant une surface hydrophobe destinée à réceptionner l'oxygène de l'extérieur de la chambre de catholyte (314) et une surface hydrophile permettant la réduction du dioxygène pour produire un effluent catholyte d'ions hydroxyle en solution ;
et une membrane ionomère (344) pour séparer la chambre d'anolyte (312) de la chambre de catholyte (314) ;
où la chambre d'anolyte (312) comprend en outre, une sortie (328) pour réceptionner l'effluent anolyte sortant ;
où la chambre de catholyte (314) comprend une sortie (346) pour libérer tout effluent catholyte ayant réagi restant dans la chambre de catholyte (314) et le mélanger à l'effluent anolyte sortant ; et
où le contrôle du pH pour déterminer et réguler le pH des effluents anolyte et catholyte mélangés sortants comprend une valve (348) pour réguler le flux de l'effluent catholyte par la sortie (346) de la chambre de catholyte (314) et un recirculateur (338) pour faire recirculer le flux des effluents anolyte et catholyte mélangés sortants dans la chambre d'anolyte (312) lorsque les effluents anolyte et catholyte mélangés ont un pH supérieur à 9.

2. Dispositif électrolytique selon la revendication 1, comprenant en outre, une valve d'entrée (352) pour libérer un agent tampon dans la chambre d'anolyte (312) de solution aqueuse contenant des ions halogénure.

3. Dispositif électrolytique selon la revendication 1, où le pH des effluants anolyte et catholyte mélangés est régulé entre environ 5 et 8.

4. Dispositif électrolytique selon l'une quelconque des revendications précédentes, où l'anode solide (320) est une anode dimensionnellement stable et où la cathode perméable au gaz (322) est une électrode à diffusion de gaz.

5. Dispositif électrolytique selon l'une quelconque des revendications précédentes, comprenant en outre un compartiment gazeux pour fournir l'oxygène à la cathode perméable au gaz (322), où le compartiment gazeux est défini par au moins une paroi extérieure qui comprend la partie de la paroi extérieure de la chambre de catholyte (314) composée de la cathode perméable au gaz dans le compartiment gazeux.

6. Procédé de génération d'acide hypohaleux dans un dispositif électrolytique (300) selon la revendication 1, le procédé comprenant :
l'oxydation des ions halogénure en présence d'eau dans une chambre d'anolyte (312) pour former un effluent anolyte contenant l'acide hypohaleux ;
l'alimentation d'oxygène par une cathode perméable au gaz (322) afin de réduire l'oxygène en présence d'eau pour former un effluent catholyte contenant des ions hydroxyle, où la cathode perméable au gaz (322) forme au moins une partie de la paroi extérieure de la chambre de catholyte (314) ;
la régulation du pH de l'effluent anolyte de l'acide hypohaleux par mélange de l'effluent catholyte contenant les ions hydroxyle avec l'effluent anolyte, en une quantité suffisante pour finir le circuit électrique dans le dispositif et produire l'acide hypohaleux et augmenter le pH de l'acide hypohaleux pour que celui-ci se situe dans l'intervalle allant d'environ 4 à 9 ;
la régulation du pH de l'effluent anolyte de l'acide hypohaleux par recirculation du flux de l'effluent anolyte de l'acide hypohaleux dans la chambre d'anolyte (312) si le pH de l'acide hypohaleux est supérieur à 9, et
l'élimination de l'acide hypohaleux pour une utilisation dans des applications de désinfection.

7. Procédé selon la revendication 6, où l'étape d'alimentation d'oxygène par la cathode perméable au gaz (322) comprend l'apport d'oxygène depuis un compartiment gazeux, où la partie de la paroi extérieure de la chambre de catholyte (314) composée de la cathode perméable au gaz (322) est incluse dans le compartiment gazeux.

8. Procédé selon la revendication 6, où l'étape de régulation du pH de l'effluent anolyte de l'acide hypohaleux comprend en outre, la recirculation du flux de l'effluent anolyte de l'acide hypohaleux vers la chambre d'anolyte (312) si le pH de l'acide hypohaleux est inférieur à 4.
